# EUROPÄISCHE PATENTSCHRIFT

(11) **EP 2 077 953 B1**
(45) Veröffentlichungstag und Bekanntmachung des Hinweises auf die Patenterteilung: **27.01.2010**
(21) Anmeldenummer: 07802582.2
(22) Anmeldetag: 13.08.2007
(51) Int. Cl.: B60K 15/03, F01N 3/20

(54) **TANK ZUR BEVORRATUNG EINES REDUKTIONSMITTELS**
TANK FOR STORING A REDUCING AGENT
RÉSERVOIR D'ALIMENTATION POUR UN AGENT DE RÉDUCTION

(30) Priorität: 04.10.2006 DE 102006046901
(43) Veröffentlichungstag der Anmeldung: 15.07.2009
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE)
(86) Internationale Anmeldenummer: PCT/EP2007/058344
(87) Internationale Veröffentlichungsnummer: WO 2008/040591

(56) Entgegenhaltungen:
- EP-A- 1 388 648
- WO-A-2004/103529
- DE-A1- 10 313 998
- DE-A1-102005 006 243

## Beschreibung

### Stand der Technik

Die Erfindung betrifft einen Tank zur Bevorratung eines flüssigen Reduktionsmittels gemäß dem Oberbegriff des Anspruchs 1.

Bei Verbrennungskraftmaschinen, insbesondere bei dieselbetriebenen Verbrennungskraftmaschinen, muss aufgrund der in den nächsten Jahren anstehenden verschärften Abgasgesetzgebung unter anderem der Anteil an Stickoxiden im Abgas reduziert werden. Zur Reduzierung des Stickoxid-Anteils im Abgas wird zum Beispiel eine selektive katalytische Reduktion durchgeführt, bei der die Stickoxide mit Hilfe von Reduktionsmitteln zu Stickstoff und Wasser reduziert werden. Als Reduktionsmittel wird zum Beispiel eine wässrige Harnstofflösung eingesetzt.

Das Reduktionsmittel wird üblicherweise in einem Tank gelagert und über eine Leitung vom Tank zu einem Dosiermodul befördert, mit dem das Reduktionsmittel zum Beispiel in das Abgasrohr eingespritzt wird.

Die derzeit eingesetzten üblichen flüssigen Reduktionsmittel gefrieren je nach zugesetztem Anti-Frostmittel bei einer Temperatur im Bereich von -11°C bis -40°C. Durch den Phasenwechsel vom flüssigen Aggregatzustand in den festen Aggregatzustand erfährt das Reduktionsmittel eine Volumenausdehnung von ungefähr 7%. Um ein Bersten des Tanks durch das Gefrieren des Reduktionsmittels zu vermeiden ist bei derzeit verwendeten Tanks zur Bevorratung des Reduktionsmittels der Tank nicht vollständig gefüllt, so dass beim Gefrieren immer ein Luftpolster über dem Reduktionsmittel steht.

Dieses Luftpolster führt zu einer Wärmeisolation des Reduktionsmittels an der Oberseite des Tanks. Das Einfrieren des Reduktionsmittels beginnt somit an den Seiten und am Boden. Die Volumenausdehnung der gefrierenden Flüssigkeit erfolgt somit immer in Richtung des Luftraums im Tank zur Mitte des Tanks hin. Hierdurch bildet sich ein Dom durch das gefrierende Reduktionsmittel aus. Aufgrund des Luftpolsters kann beim Gefrieren des Reduktionsmittels keine Schädigung am Tank auftreten.

Nachteil des Luftpolsters im Tank ist jedoch, dass z.B. bei einer Überfüllung des Tanks eine Ausdehnung des Reduktionsmittels erfolgt, durch die der Tank beschädigt werden kann.

### Offenbarung der Erfindung

Vorteile der Erfindung

Ein erfindungsgemäß ausgebildeter Tank zur Bevorratung eines Reduktionsmittels, insbesondere eines flüssigen Reduktionsmittels zur Reduktion von Stickstoffoxiden aus dem Abgas einer Verbrennungskraftmaschine zu Stickstoff und Wasser, umfasst einen Außenbehälter, in dem ein Innenbehälter aufgenommen ist. Der Innenbehälter ist in einer bezüglich einer Achse des Außenbehälters axial verschiebbaren Lagerung im Außenbehälter aufgenommen, wobei der Innenbehälter so gelagert ist, dass durch eine Verschiebung des Innenbehälters in der Lagerung das Volumen im Außenbehälter verändert wird.

Damit sich das Volumen des Außenbehälters durch Verschieben des Innenbehälters vergrößert, ist der Innenbehälter so in einer Öffnung im Außenbehälter aufgenommen ist, dass der Innenbehälter aus dem Außenbehälter herausragt. Wenn der Innenbehälter vollständig vom Außenbehälter umschlossen wäre, würde ein Verschieben des Innenbehälters lediglich zu einer geometrischen Änderung des Volumens des Außenbehälters führen, die Größe des Volumens bleibt dabei aber gleich.

Vorteil des erfindungsgemäß ausgebildeten Tanks ist es, dass eine Verformung des Außenbehälters beim Gefrieren des Reduktionsmittels zu einer Verschiebung der Wandung des Außenbehälters führt, ohne dass der Innenbehälter verschoben wird, wobei das Volumen im Außenbehälter vergrößert wird. Durch die feste Positionierung des Innenbehälters werden Beschädigungen, die bei einer Positionsänderung des Innenbehälters auftreten können, vermieden. Solche Beschädigungen sind z.B. das Abknicken oder Reißen von festen Verbindungen oder starren Leitungen, mit denen der Innenbehälter z.B. mit einer Fahrzeugkarosserie verbunden ist.

In einer Ausführungsform ist zwischen dem Innenbehälter und dem Außenbehälter ein Federelement aufgenommen. Durch das Federelement lässt sich der Innenbehälter in Bezug auf den Außenbehälter axial fixieren. Durch die Verwendung eines Federelements ist eine Verschiebung des Innenbehälters im Außenbehälter in axialer Richtung jedoch weiterhin möglich. Das Federelement stützt sich dabei vorzugsweise mit einer Seite am Boden des Innenbehälters und mit der anderen Seite am Boden des Außenbehälters ab. Bevorzugt ist das Federelement, welches zwischen dem Innenbehälter und dem Außenbehälter aufgenommen ist, aus einem Elastomer gefertigt.

Um den Innenbehälter mit dem Außenbehälter zu verbinden, ist vorzugsweise am Innenbehälter eine Schulter ausgebildet, auf die ein Überwurfelement wirkt, das mit dem Außenbehälter kraft- oder formschlüssig verbunden ist. Als Überwurfelement eignet sich z.B. eine Überwurfmutter, die an einem Gewinde, welches den Innenbehälter umschließt, verschraubt ist.

Um bei der Befestigung des Innenbehälters am Außenbehälter mithilfe des Überwurfelements eine axiale Verschiebbarkeit des Innenbehälters zu ermöglichen, ist vorzugsweise zwischen dem Innenbehälter und dem Außenbehälter im Bereich der axialen Lagerung, an der der Innenbehälter aus dem Außenbehälter herausragt, ein elastischer Dichtring aufgenommen. Der elastische Dichtring liegt dabei z.B. auf der Schulter des Innenbehälters auf und der Außenbehälter liegt auf der gegenüber liegenden Seite am elastischen Dichtring an. Sobald das Reduktionsmittel gefriert und somit das Volumen des Reduktionsmittels zunimmt, wird die Wandung des Außenbehälters aufgrund der Volumenzunahme des Reduktionsmittels am Innenbehälter entlang nach oben bewegt und das Überwurfelement hebt vom Dichtring ab. Der elastische Dichtring dehnt sich hierbei vorzugsweise aus um die Dichtheit zu gewährleisten. Eine weitere Aufgabe des elastischen Dichtringes ist es, die Verbindung zwischen dem Außenbehälter und dem Innenbehälter gegen die Umgebung abzudichten, damit kein Reduktionsmittels aus dem Außenbehälter herauslaufen kann. Dies ist insbesondere dann erforderlich, wenn das Reduktionsmittel im Außenbehälter nicht gefroren ist.

Der Innenbehälter ist vorzugsweise mit einem Fördermodul verbunden. Die Verbindung des Fördermoduls mit dem Innenbehälter ist dabei vorzugsweise so ausgeführt, dass eine Relativbewegung zwischen Fördermodul und Innenbehälter nicht möglich ist. Hierzu ist das Fördermodul vorzugsweise direkt auf den Innenbehälter aufgesetzt. Das Fördermodul umfasst im Allgemeinen eine Pumpe, mit der Reduktionsmittel aus dem Innenbehälter entnommen werden kann.

Im Innenbehälter ist vorzugsweise weiterhin ein Heizelement aufgenommen, mit welchem erstarrtes Reduktionsmittel aufgetaut werden kann. Das Heizelement ist vorzugsweise ebenfalls mit dem Fördermodul verbunden und wird über das Fördermodul angesteuert. Durch die Befestigung des Fördermoduls auf dem Innenbehälter derart, dass eine Relativbewegung zwischen Innenbehälter und Fördermodul nicht auftreten kann, wird auch eine Beschädigung des Heizelements verhindert, die auftreten würde, wenn sich das Fördermodul relativ zum Innenbehälter bewegt, sobald das Reduktionsmittel im Innenbehälter durchgefroren ist. Die Relativbewegung zwischen Fördermodul und Innenbehälter würde z.B. dadurch auftreten, dass Gefrieren des Reduktionsmittels gegen das Fördermodul presst und dieses bei nicht ausreichender Befestigung vom Innenbehälter anhebt. Da das Heizelement im Allgemeinen starr mit dem Fördermodul verbunden ist und aufgrund des gefrorenen Reduktionsmittels im Innenbehälter nicht mehr beweglich ist, würde so ggf. das Heizelement vom Fördermodul abreißen. Eine Beheizung wäre nicht mehr möglich und das Reduktionsmittel könnte nicht mehr aufgetaut werden. Im Allgemeinen ist der Tank so aufgebaut, dass das Fördermodul, mit dem der Innenbehälter verbunden ist, außerhalb des Außenbehälters positioniert ist. Durch die Positionierung des Fördermoduls außerhalb des Außenbehälters ist es möglich, z.B. bei Beschädigungen am Fördermodul dieses auf einfache Weise zu reparieren und auszutauschen, ohne den kompletten Tank zerlegen zu müssen.

### Kurze Beschreibung der Zeichnungen

Ausführungsbeispiele der Erfindung sind in den Zeichnungen dargestellt und in der nachfolgenden Beschreibung näher erläutert.

### Es zeigen

- Figur 1: einen Tank zur Bevorratung von Reduktionsmittel, in dem das Reduktionsmittel erstarrt ist,
- Figur 2: eine schematische Darstellung eines erfindungsgemäß ausgebildeten Tanks zur Bevorratung eines Reduktionsmittels,
- Figur 3: eine detaillierte Darstellung einer Befestigung eines Innenbehälters in einem Außenbehälter mit einem Überwurfelement.

### Ausführungsformen der Erfindung

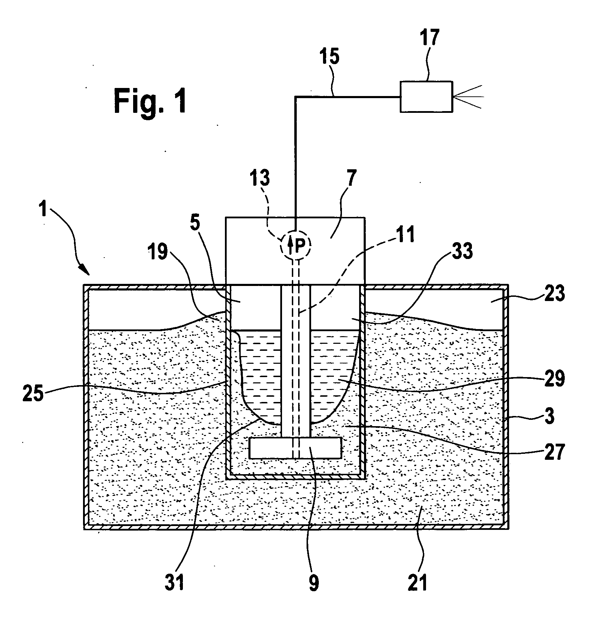

In Figur 1 ist ein Tank zur Bevorratung eines Reduktionsmittels dargestellt. Ein Tank 1 umfasst einen Außenbehälter 3, in dem ein Innenbehälter 5 aufgenommen ist. Der Innenbehälter 5 wird z.B. mit einem Überwurfelement am Außenbehälter 3 befestigt. Ein geeignetes Überwurfelement ist z.B. eine Überwurfmutter. Es ist aber auch jede andere Befestigungsmöglichkeit, die dem Fachmann bekannt ist, denkbar. Der Innenbehälter 5 ist mit einem Fördermodul 7 verbunden. Das Fördermodul 7 umfasst z.B. eine Förderpumpe, mit der Reduktionsmittel aus dem Innenbehälter 5 gefördert werden kann. Weiterhin ist das Fördermodul 7 mit einem Heizelement 9 verbunden. Durch das Heizelement 9 kann das Reduktionsmittel im Innenbehälter 5 aufgetaut werden, wenn dieses eingefroren ist. Das Heizelement ist vorzugsweise so ausgeführt, dass dieses eine Entnahmeleitung 11 umschließt. Durch das Umschließen der Entnahmeleitung 11 mit dem Heizelement 9 wird Reduktionsmittel, welches sich in der Entnahmeleitung 11 befindet und gefroren ist, zunächst aufgetaut. Die Entnahmeleitung 11 ist mit der Förderpumpe 13 verbunden, die im Fördermodul 7 aufgenommen ist.

An die Förderpumpe 13 schließt sich eine Reduktionsmittelleitung 15 an. Die Reduktionsmittelleitung 15 endet in einer Dosiervorrichtung 17, mit welcher das flüssige Reduktionsmittel einem SCR-Katalysator (Selective Catalytic Reduction), der hier nicht dargestellt ist, zugeführt wird. Im SCR-Katalysator werden Stickstoffoxide, die bei der Verbrennung von Kraftstoff in einer Verbrennungskraftmaschine entstehen und mit dem Abgas abgeführt werden, zu Stickstoff und Wasser reduziert. Das Reduktionsmittel ist z.B. eine wässrige Harnstofflösung.

Im heißen Abgas verdampft das flüssige Reduktionsmittel und bildet Ammoniak, der sich im SCR-Katalysator einlagert. Der im Katalysator eingelagerte Ammoniak wandelt die im Abgas enthaltenen Stickstoffoxide in elementaren Stickstoff und Wasserdampf um.

Bei Temperaturen unterhalb des Schmelzpunktes des flüssigen Reduktionsmittels erstarrt dieses. Der Erstarrungsvorgang beginnt an den Wandungen des Außenbehälters 3 und zieht sich ins Innere des Außenbehälters 3 fort. Wenn als flüssiges Reduktionsmittel eine wässrige Harnstofflösung eingesetzt wird, erstarrt diese bei einer Temperatur zwischen -11°C und - 40°C. Die Temperatur hängt dabei davon ab, welches Frostschutzmittel oder wie viel Frostschutzmittel dem flüssigen Reduktionsmittel zugesetzt wurde. Damit das Reduktionsmittel vollständig erstarrt, sind im Allgemeinen mehrere Tage erforderlich. Durch die Volumenausdehnung des Reduktionsmittels beim Erstarren bildet sich ein Dom 19 aus. Da der Erstarrungsvorgang an den Wandungen des Außenbehälters 3 beginnt und sich zum Inneren hin fortsetzt, umschließt der Dom 19 den Innenbehälter 5. Das im Außenbehälter erstarrte Reduktionsmittel ist in Figur 1 mit Bezugszeichen 21 bezeichnet.

Damit durch die Bildung des Domes 19 der Außenbehälter 3 nicht zerstört wird, ist der Außenbehälter 3 nur soweit befüllt, dass sich oberhalb des Reduktionsmittels ein Luftraum 23 befindet. Durch die Bildung des Domes 19 wird Luft aus dem Luftraum 23 verdrängt. Der Luftraum 23 wird so groß gewählt, dass auch bei vollständig erstarrtem Reduktionsmittel 21 eine Verformung des Außenbehälters 3 vermieden wird. Der Luftraum 23 nimmt somit mindestens das Volumen ein, um welches sich das Reduktionsmittel ausdehnt, wenn es erstarrt.

Nachdem das Reduktionsmittel im Außenbehälter 3 soweit erstarrt ist, dass das erstarrte Reduktionsmittel 21 die Wandung 25 des Innenbehälters 5 kontaktiert, beginnt auch das Reduktionsmittel im Innenbehälter 5 zu erstarren. Auch im Innenbehälter 5 beginnt der Erstarrungsvorgang an der Wandung 25 und setzt sich zur Mitte des Innenbehälters 5 hin fort. Bei der in Figur 1 dargestellten Ausführungsform ist ein Teil des Reduktionsmittels im Innenbehälter 5 bereits erstarrt. Dieses erstarrte Reduktionsmittel im Innenbehälter ist mit Bezugszeichen 27 bezeichnet. Da das Reduktionsmittel noch nicht vollständig erstarrt ist, befindet sich auch flüssiges Reduktionsmittel 29 im Innenbehälter 5. Da der Erstarrungsvorgang an den Wandungen 25 des Innenbehälters 5 beginnt, ist das flüssige Reduktionsmittel 29 von dem erstarrten Reduktionsmittel 27 umschlossen. Wenn das flüssige Reduktionsmittel 29 im Innenbehälter 5 weiter erstarrt, wandert die Phasengrenze 31 zwischen dem erstarrten Reduktionsmittel 27 und dem flüssigen Reduktionsmittel 29 weiter nach oben und zur Mitte. Aufgrund der Volumenausdehnung des Reduktionsmittels bildet sich dann auch im Innenbehälter 5 ein Dom aus. Aus diesem Grund ist es ebenfalls erforderlich, dass im Innenbehälter 5 ein Luftpolster 33 enthalten ist, um eine Beschädigung des Innenbehälters zu vermeiden. Damit durch das Erstarren des Reduktionsmittels im Innenbehälter 5 das Heizelement 9 nicht beschädigt wird, ist der Innenbehälter 5 vorzugsweise starr mit dem Fördermodul 7 verbunden.

Der Innenbehälter 5 ist hier fest mit dem Außenbehälter 3 verbunden. Eine Bewegung des Innenbehälters 5 im Außenbehälter 3 ist nicht möglich. Sollte der Außenbehälter überfüllt werden und das Luftpolster 23 zu klein sein, wird die Wandung des Außenbehälters 3 durch das erstarrte Reduktionsmittel nach außen gedrückt. Hierdurch können Beschädigungen am Außenbehälter 3 auftreten.

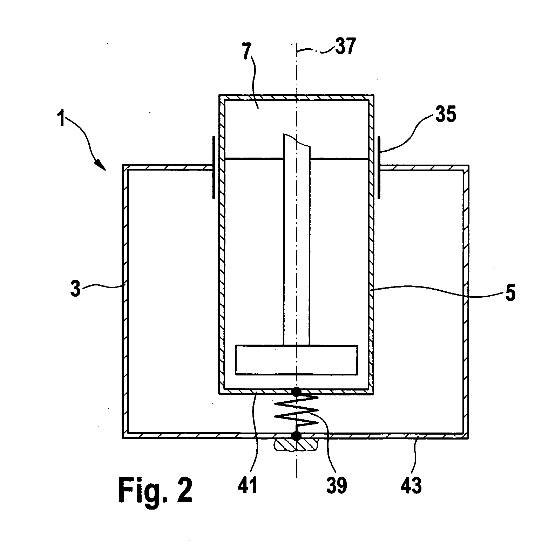

In Figur 2 ist ein erfindungsgemäß ausgebildeter Tank mit axial verschiebbarem Innenbehälter dargestellt.

Ein erfindungsgemäß ausgebildeter Tank 1 umfasst ebenfalls einen Innenbehälter 5, der in einem Außenbehälter 3 aufgenommen ist. Der Innenbehälter 5 ist mit dem Fördermodul 7 zu einer Funktionseinheit verbunden. Die Verbindung des Innenbehälters 5 mit dem Fördermodul 7 ist dem Fachmann bekannt und deshalb hier nur schematisch dargestellt.

Erfindungsgemäß ist der Innenbehälter 5 in einer axial beweglichen Lagerung 35 bezüglich einer Achse 37 im Außenbehälter 3 aufgenommen. Sobald das Reduktionsmittel im Außenbehälter 3 erstarrt und sich somit ausdehnt, wird der Innenbehälter 5, der mit dem Fördermodul 7 zu der Funktionseinheit verbunden ist, in axiale Richtung aus dem Innenbehälter 3 herausgedrückt. Auch bei Überfüllung des Außenbehälters 3 und damit einem zu kleinen Luftpolster wird so vermieden, dass der Außenbehälter 3 bei Erstarren des Reduktionsmittels beschädigt wird.

Als axial bewegliche Lagerung 35 eignet sich jede, dem Fachmann bekannte Lagerung. Um zu verhindern, dass der Innenbehälter 5 beginnt sich innerhalb des Außenbehälters 3 z.B. aufgrund von außerhalb eingebrachten Kräften zu bewegen, ist der Innenbehälter 5 elastisch mit dem Außenbehälter 3 verbunden. Die Verbindung des Innenbehälters 5 mit dem Außenbehälter 3 erfolgt z.B., wie in Figur 2 dargestellt, durch ein Federelement 39, welches zwischen dem Boden 41 des Innenbehälters 5 und dem Boden 43 des Außenbehälters 3 aufgenommen ist. Um zu verhindern, dass der Innenbehälter 5 beginnt zu schwingen, ist es erforderlich, dass das Federelement 39 eine ausreichend hohe Federkonstante aufweist. Als Federelement 39 eignet sich z.B. ein Puffer aus einem Elastomer.

Bewegungen des Innenbehälters 5 im Außenbehälter 3 werden z.B. dann aufgeprägt, wenn der erfindungsgemäß ausgebildete Tank 1 in einem Kraftfahrzeug eingesetzt wird. Sobald das Kraftfahrzeug fährt, werden Unebenheiten der Straße an das Kraftfahrzeug und damit auch an den Tank 1 übertragen. Aufgrund der unterschiedlichen Masse des Außenbehälters 3 und des Innenbehälters 5 werden diese unterschiedlich beschleunigt, so dass aufgrund der Bewegungen des Fahrzeuges eine Relativbewegung zwischen dem Außenbehälter 3 und dem Innenbehälter 5 entsteht. Diese Relativbewegung zwischen dem Innenbehälter 5 und dem Außenbehälter 3 wird durch das Federelement 39 reduziert oder bevorzugt vollständig vermieden.

Die axial bewegliche Lagerung 35 ist vorzugsweise so ausgerührt, dass diese flüssigkeitsdicht ist. Auf diese Weise wird vermieden, dass flüssiges Reduktionsmittel aus dem Außenbehälter 3 an die Umgebung austreten kann.

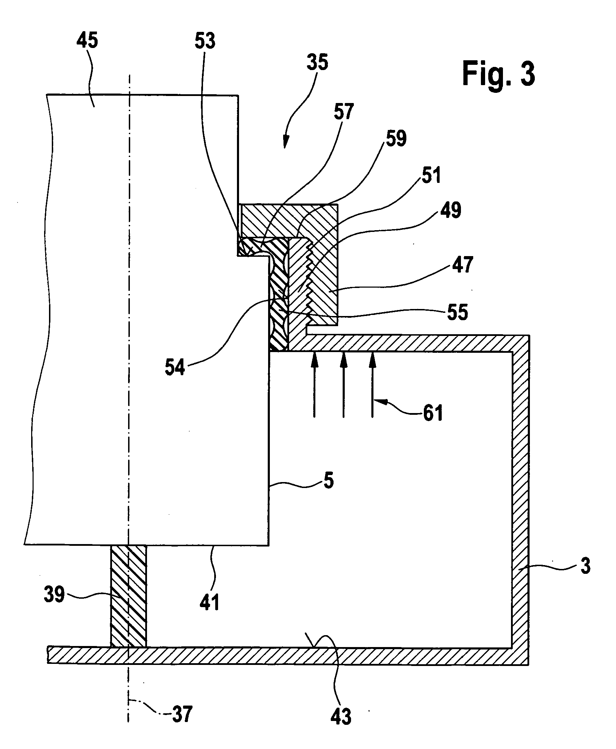

Ein Beispiel für eine axial bewegliche Lagerung ist in Figur 3 dargestellt.

Bei der in Figur 3 dargestellten Ausführungsform ist die Funktionseinheit 45, die den Innenbehälter 5 und das Fördermodul 7 umfasst, mit einem Überwurfelement 47 am Außenbehälter 3 befestigt. Hierzu ist am Außenbehälter 3 ein hülsenförmiger Fortsatz 49 ausgebildet, an welchem ein Außengewinde 51 ausgebildet ist. Der hülsenförmige Fortsatz 49 umschließt eine Öffnung 54, in welche die Funktionseinheit 45 eingeschoben wird. Um die Funktionseinheit 45 im Außenbehälter 3 zu fixieren, ist an der Funktionseinheit 45 eine Schulter 53 ausgebildet. Das Überwurfelement 47, welches hier als Überwurfmutter ausgebildet ist und auf das Außengewinde 51 am hülsenförmigen Fortsatz 49 aufgeschraubt wird, wirkt auf die Schulter 53 und fixiert die Funktionseinheit 45 im Außenbehälter 3. Zur Abdichtung ist zwischen dem hülsenförmigen Fortsatz 49 und der Funktionseinheit 45 ein elastisches Dichtelement 55 aufgenommen. Das Dichtelement 55 ist vorzugsweise profiliert. Aufgrund der Profilierung ist das Dichtelement 55 radial elastisch. Das Dichtelement 55 wird unter mäßiger radialer Vorspannung zwischen dem hülsenförmigen Fortsatz 49 und der Funktionseinheit 45 montiert. Dies ermöglicht einerseits eine axiale Verschiebung der Funktionseinheit 45 im Außenbehälter 3 bezüglich der Achse 37, andererseits ist auch eine Abdichtung zwischen der Funktionseinheit 45 und dem Außenbehälter 3 gegeben, dass kein Reduktionsmittel aus dem Außenbehälter 3 an die Umgebung ausfließen kann.

In einer bevorzugten Ausführungsform weist das Dichtelement 55 einen Kragen 57 auf, der auf der Schulter 53 aufliegt und so eine zusätzliche axiale Abdichtung gewährleistet. Damit eine axiale Verschiebung der Funktionseinheit 45 im Außenbehälter 3 möglich ist, ist es jedoch erforderlich, dass der Kragen 57 sehr elastisch ist. Dies kann z.B. durch eine starke Profilierung gewährleistet werden. Eine weitere Aufgabe des Kragens 57 ist es, das Dichtelement 55 in der axial beweglichen Lagerung 35, die durch den hülsenförmigen Fortsatz 49 und die darin aufgenommene Funktionseinheit 45 gebildet wird, axial zu positionieren. Ein ausreichend großer Abstand zwischen der Schulter 53 und dem Überwurfelement 47 wird dadurch erzielt, dass das Überwurfelement 47 gegen einen Anschlag 59 gestellt wird. Der Anschlag 59 ist z.B. als Stirnfläche am hülsenförmigen Fortsatz 49 ausgebildet.

Durch das Federelement 39, welches in der hier dargestellten Ausführungsform als Elastomerteil ausgebildet ist, wird vermieden, dass die Funktionseinheit 45 in den Außenbehälter 3 fällt, bis diese auf dem Boden des Außenbehälters 3 aufsteht. Durch das Federelement 39 wird ein Abstand zwischen dem Boden 41 des Innenbehälters 5 und dem Boden 43 des Außenbehälters 3 eingestellt. Ebenfalls wird durch die Höhe des Federelementes 39 der Abstand zwischen der Schulter 53 und dem Überwurfelement 47 eingestellt.

Wenn nun das Reduktionsmittel im Außenbehälter 3 beginnt zu erstarren, wirkt eine Kraft auf den Außenbehälter 3. Dies ist mit den Pfeilen 61 dargestellt. Durch die auf den Außenbehälter 3 wirkende Kraft 61 wird die Hülle des Außenbehälters 3 nach außengedrückt. Durch die axial bewegliche Lagerung 35 kann diese nach oben gerichtete Verformung aufgenommen werden. Eine Beschädigung des Tanks 1 wird verhindert. Auch bei Verformung der Hülle des Außenbehälters 3 bleibt die Funktionseinheit 45 an ihrer Position. Hierdurch werden Leitungen und Einrichtungen, mit denen die Funktionseinheit 45 z.B. mit einer Fahrzeugkarosserie verbunden ist, nicht belastet. Auch ist es unproblematisch, wenn das Überwurfelement 47 vom Kragen 57 des Dichtelementes 55 abhebt, da eine Abdichtung gegen Flüssigkeit nicht erforderlich ist, wenn das Reduktionsmittel im Außenbehälter 3 gefroren ist. Sobald das Reduktionsmittel wieder aufgetaut ist, sinkt das Überwurfelement 47 wieder auf den Kragen 57 ab und die axiale Abdichtung durch den Kragen 57 wird wieder hergestellt. Auch durch das Federelement 39 kann die Funktionseinheit 45 an ihre Position gehalten werden, wenn sich der Boden 43 des Außenbehälters 3 gegenüber der Funktionseinheit 45 bewegt. Bei einer starren Verbindung der Funktionseinheit 45 mit dem Boden 43 des Außenbehälters 3 würde sich die Funktionseinheit 45 gegenüber der Fahrzeugkarosserie bewegen und es könnten so Beschädigungen auftreten.

## Patentansprüche

1. Tank zur Bevorratung eines Reduktionsmittels, insbesondere eines flüssigen Reduktionsmittels zur Reduktion von Stickstoffoxiden aus dem Abgas einer Verbrennungskraftmaschine zu Stickstoff und Wasser, umfassend einen Außenbehälter (3), in dem ein Innenbehälter (5) aufgenommen ist, wobei der Innenbehälter (5) in einer bezüglich einer Achse (37) des Außenbehälters (3) axial verschiebbaren Lagerung (35) im Außenbehälter (3) aufgenommen ist, wobei der Innenbehälter (5) so gelagert ist, dass durch eine Verschiebung des Innenbehälters (5) in der Lagerung (35) das Volumen im Außenbehälter (3) verändert wird, der Innenbehälter (5) so in einer Öffnung (54) im Außenbehälter (3) aufgenommen ist, **dadurch gekennzeichnet dass** dass der Innenbehälter (5) aus dem Außenbehälter (3) herausragt.

2. Tank nach Anspruch 1, **dadurch gekennzeichnet, dass** zwischen dem Innenbehälter (5) und dem Außenbehälter (3) ein Federelement (39) aufgenommen ist.

3. Tank nach Anspruch 2, **dadurch gekennzeichnet, dass** sich das Federelement (39) mit einer Seite am Boden (41) des Innenbehälters (5) und mit der anderen Seite am Boden (43) des Außenbehälters (3) abstützt.

4. Tank nach Anspruch 2 oder 3, **dadurch gekennzeichnet, dass** das Federelement (39) aus einem Elastomer gefertigt ist.

5. Tank nach einem der Ansprüche 1 bis 4, **dadurch gekennzeichnet, dass** am Innenbehälter (5) eine Schulter (53) ausgebildet ist, auf die ein Überwurfelement (47) wirkt, das mit dem Außenbehälter (3) kraft- oder formschlüssig verbunden ist.

6. Tank nach einem der Ansprüche 1 bis 5, **dadurch gekennzeichnet, dass** zwischen dem Innenbehälter (5) und dem Außenbehälter (3) im Bereich der axialen Lagerung, an der der Innenbehälter (5) aus dem Außenbehälter (3) herausragt, ein elastisches Dichtelement (55) aufgenommen ist.

7. Tank nach einem der Ansprüche 1 bis 6, **dadurch gekennzeichnet, dass** der Innenbehälter (5) mit einem Fördermodul (7) verbunden ist.

8. Tank nach Anspruch 7, **dadurch gekennzeichnet, dass** das Fördermodul (7) so mit dem Innenbehälter (5) verbunden ist, dass es außerhalb des Außenbehälters (3) positioniert ist.

9. Tank nach einem der Ansprüche 1 bis 8, **dadurch gekennzeichnet, dass** im Innenbehälter (5) ein Heizelement (9) aufgenommen ist.

## Claims

1. Tank for storing a reducing agent, in particular a liquid reducing agent for the reduction of nitrogen oxides from the exhaust gas of an internal combustion engine to form nitrogen and water, comprising an outer container (3) in which an inner container (5) is held, with the inner container (5) being held in the outer container (3) in a mounting (35) which is axially movable in relation to an axis (37) of the outer container (3), with the inner container (5) being mounted such that the volume in the outer container (3) is varied as a result of a movement of the inner container (5) in the mounting (35), **characterized in that** the inner container (5) is held in an opening (54) in the outer container (3) in such a way that the inner container (5) projects out of the outer container (3).

2. Tank according to Claim 1, **characterized in that** a spring element (39) is held between the inner container (5) and the outer container (3).

3. Tank according to Claim 2, **characterized in that** the spring element (39) is supported with one side on the base (41) of the inner container (5) and with the other side on the base (43) of the outer container (3).

4. Tank according to Claim 2 or 3, **characterized in that** the spring element (39) is produced from an elastomer.

5. Tank according to one of Claims 1 to 4,
**characterized in that** a shoulder (53) is formed on the inner container (5), which shoulder (53) is acted on by a sleeve element (47) which is connected in a non-positively or positively locking manner to the outer container (3).

6. Tank according to one of Claims 1 to 5,
**characterized in that** an elastic sealing element (55) is held between the inner container (5) and the outer container (3) in the region of the axial mounting at which the inner container (5) projects out of the outer container (3).

7. Tank according to one of Claims 1 to 6,
**characterized in that** the inner container (5) is connected to a feed module (7).

8. Tank according to Claim 7, **characterized in that** the feed module (7) is connected to the inner container (5) in such a way as to be positioned outside the outer container (3).

9. Tank according to one of Claims 1 to 8,
**characterized in that** a heating element (9) is held in the inner container (5).

## Revendications

1. Réservoir d'alimentation en agent réducteur, notamment un agent réducteur fluide, pour la réduction des oxydes d'azote hors des gaz d'échappement d'un moteur à combustion interne pour donner de l'azote et de l'eau, comprenant un récipient extérieur (3) dans lequel est reçu un récipient intérieur (5), le récipient intérieur (5) étant reçu dans un support (35) dans le récipient extérieur (3) pouvant être déplacé axialement par rapport à un axe (37) du récipient extérieur (3), le récipient intérieur (5) étant monté de telle sorte qu'un déplacement du récipient intérieur (5) dans le support (35) entraîne une variation du volume dans le récipient extérieur (3), **caractérisé en ce que** le récipient intérieur (5) est reçu dans une ouverture (54) dans le récipient extérieur (3) de telle sorte que le récipient intérieur (5) dépasse du récipient extérieur (3).

2. Réservoir selon la revendication 1, **caractérisé en ce qu'**un élément de ressort (39) est reçu entre le récipient intérieur (5) et le récipient extérieur (3).

3. Réservoir selon la revendication 2, **caractérisé en ce que** l'élément de ressort (39) s'appuie par un côté contre le fond (41) du récipient intérieur (5) et par l'autre côté contre le fond (43) du récipient extérieur (3).

4. Réservoir selon la revendication 2 ou 3,
**caractérisé en ce que** l'élément de ressort (39) est fabriqué en élastomère.

5. Réservoir selon l'une quelconque des revendications 1 à 4, **caractérisé en ce qu'**un épaulement (53) est réalisé sur le récipient intérieur (5), sur lequel agit un élément d'accouplement (47), qui est connecté par engagement par force ou par correspondance géométrique au récipient extérieur (3).

6. Réservoir selon l'une quelconque des revendications 1 à 5, **caractérisé en ce qu'**un élément d'étanchéité élastique (55) est reçu entre le récipient intérieur (5) et le récipient extérieur (3) dans la région du support axial, au niveau duquel le récipient intérieur (5) dépasse du récipient extérieur (3).

7. Réservoir selon l'une quelconque des revendications 1 à 6, **caractérisé en ce que** le récipient intérieur (5) est connecté à un module de transport (7).

8. Réservoir selon la revendication 7, **caractérisé en ce que** le module de transport (7) est connecté au récipient intérieur (5) de telle sorte qu'il soit positionné à l'extérieur du récipient extérieur (3).

9. Réservoir selon l'une quelconque des revendications 1 à 8, **caractérisé en ce qu'**un élément chauffant (9) est reçu dans le récipient intérieur (5).
